# EUROPEAN PATENT APPLICATION

(11) **EP 3 825 369 A1**
(43) Date of publication of application: **26.05.2021**
(21) Application number: 19211346.2
(22) Date of filing: 25.11.2019
(51) Int. Cl.: C09D 133/00, C09J 133/00

(54) **GILDING TECHNIQUE**

(71) Applicant: Antarakis, Lisa, 230 56 Papadianika, Lakonia (GR)
(72) Inventor: Antarakis, Lisa, 230 56 Papadianika, Lakonia (GR)
(74) Representative: Slingsby Partners LLP

(57) **Abstract**

A gilding size and method for gilding a surface using the gilding size, the gilding size comprising 4% acrylic adhesive and between 70% and 90% water by volume.

## Description

### BACKGROUND OF THE INVENTION

Gilding is a method used to apply metallic leaf (commonly gold leaf) to a surface, for example to furniture or architectural features.

An existing technique for gilding is water gilding. Water gilding is commonly performed on a porous surface, for example wood. The technique typically involves first covering the surface with gesso (usually a mixture of chalk and animal hide glue), then with bole (usually a mixture of clay and glue) and finally with water before applying the gold leaf. The surface is then polished to create shine. The technique of water gilding can be used to create a high quality and shiny gold surface, however the technique requires a high level of skill. Due to the requirement to polish the surface after the gold leaf is applied, this technique is considerably labour intensive.

Oil gilding is another technique which may be used to apply gold leaf to a surface. In contrast to water gilding, oil gilding is suitable for use on a completely sealed surface. Oil gilding involves applying an oil size to the surface. Oil sizes are commonly composed of boiled linseed oil. The applied oil size is allowed to dry until tackiness is achieved. Gold leaf is then applied to the surface.

Oil gilding is quicker and less labour intensive than water gilding. Less skill is required and fewer steps must be performed. However, oil gilding cannot be used to create the same quality of shine that can be achieved with water gilding. Furthermore, the tackiness of oil size means that the surface is likely to attract dust and other debris during the gilding process. This can have a detrimental effect on the appearance of the surface once gilded. Oil gilding is thus not an appropriate technique to be used in dusty environments such as construction sites.

It is therefore desirable to develop a less labour intensive gilding technique which produces a high quality shiny finish and may be used in all environments on all types of surfaces.

### BRIEF SUMMARY OF THE INVENTION

According to the present invention there is provided a gilding size, the size comprising at least 4% acrylic adhesive and between 70% and 90% water by volume.

The size may comprise at least 75% water by volume.

The size may comprise at least 80% water by volume.

The size may comprise at least 85% water by volume.

The size may be transparent.

The size may be coloured.

The size may further comprise an emulsifier.

The size may further comprise an essential oil.

The size may further comprise a varnish.

The varnish may be polyvinyl acetate.

The varnish may be shellac.

The acrylic adhesive may be an acrylic resin.

There may be provided a method for gilding a surface, the method comprising applying to a surface a size as described herein.

The method may comprise subsequent to applying the size to the surface, polishing the surface using a cloth.

The step of polishing the surface may be done using a cloth dipped in the size.

The step of polishing the surface may be done using a cotton cloth.

The step of polishing the surface may be done only when the surface is not tacky.

The method may comprise applying the size in multiple layers.

The method may further comprise, subsequent to the step of applying the size to the surface, applying metallic leaf to the surface.

The method may further comprise, prior to the step of applying the size to the surface, applying an oily varnish and organic solvent to the surface.

### BRIEF DESCRIPTION OF THE DRAWINGS

The present invention will now be described by way of example with reference to the accompanying drawings. In the drawings:
Figure 1 shows a surface which has been gilded using a new gilding method.
Figure 2 shows an example of a new gilding method

### DETAILED DESCRIPTION OF THE INVENTION

In outline, the method to be described involves applying to a surface to be gilded a size comprising an adhesive (e.g. an acrylic adhesive and/or PVA) and a substantial proportion of water (e.g. greater than 70% water by volume of size). Then thin sheets of metal are applied over the size. The size adheres the metal to the surface. It has been found that this method can reliably result in a high quality gilded finish, with reduced working time and greater resistance to adverse environmental conditions during gilding than at least some other gilding processes.

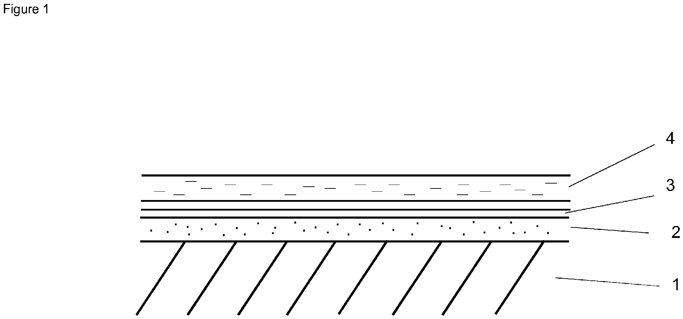

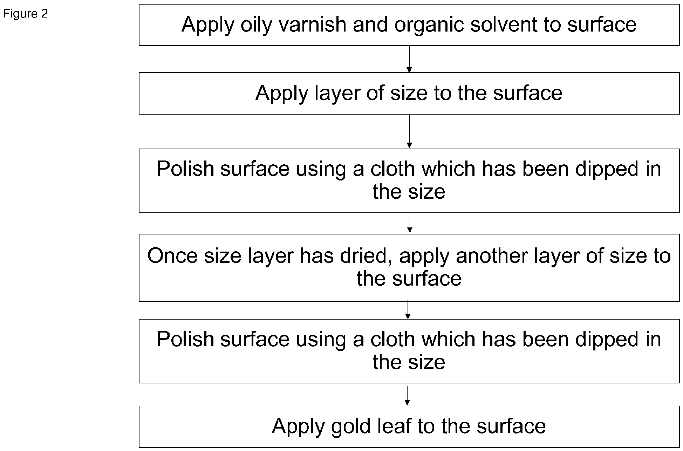

It may be desirable to prepare the surface prior to gilding. In the example shown in Figure 2, the method comprises first applying an oily varnish and organic solvent 2 to the surface 1 (seen in Figure 1). The organic solvent may be white spirit. The oily varnish and organic solvent may be applied using any suitable implement: for example a brush, a sponge or a cloth.

Subsequent to applying oily varnish and organic solvent, the method comprises applying size 3 to the surface. The size may be applied using any suitable implement: for example a brush, a sponge or a cloth. The method may further comprise polishing the surface onto which size has been applied. Polishing the surface may be performed using a cloth. The cloth may have been dipped in the size immediately prior to the polishing step. The cloth may carry size during the polishing step. The cloth may be a cotton cloth. Polishing the surface using a cloth helps to ensure that the result of performing the gilding method is a surface with a shiny finish. This method has the advantage that, unlike water gilding, no polishing is required after the metallic leaf has been applied to achieve a shiny finish.

After the size has been applied to the surface, it will typically become tacky after a period of time. It is preferred that any step of polishing the sized surface is stopped before the surface becomes tacky, or at the point when the surface becomes tacky. The method may comprise polishing the surface only when the surface is not tacky. The method may further comprise stopping polishing the surface before it becomes tacky. Otherwise, the cloth used for polishing is likely to stick to the surface and affect the appearance of the gilded surface.

The method may further comprise applying additional layers of size to the surface. In the example shown in Figure 2, one additional layer of size is applied to the previously sized region of the surface. In other examples, more or fewer additional layers of size may be applied. Each layer may be applied once the preceding size layer has dried. As seen in Figure 2, the method may comprise polishing the surface using a cloth subsequent to applying each layer of size.

Each layer of size may take less than 5 minutes to dry. The drying time depends on the porosity of the underlying surface and the environmental conditions, notably temperature and humidity. In typical conditions it has been found that each layer of size may take less than 2 minutes to dry. This is far shorter than the time taken for oil size to dry. This method is therefore quicker than the technique of oil gilding which requires waiting for oil size to dry. Furthermore, the fast drying nature of the present size means that unlike oil gilding, the method described can be used in a dusty environment without the size attracting large quantities of debris.

In some examples, the size is colourless and transparent. In other examples, the size is coloured. A coloured size can be advantageous as the gilder is able to see where the size has been already been applied before applying another layer. The method may comprise applying the size in multiple layers which overlap. This can help to achieve a uniform size application and thus a smooth and shiny appearance of the surface once gilded.

The method may further comprise, subsequent to applying the size, applying metallic leaf to the surface. In the example shown in Figure 2, gold leaf is applied to the surface. Leaf of other metals may be used: for example, silver or platinum. The leaf is preferably a metal sheet whose thickness is less than 1 µm or more preferably less than 0.2 µm.

The present method may be performed more quickly than oil gilding because the claimed size can dry faster than oil size. The present method may be performed more quickly than water gilding because the present method comprises applying fewer substances to the surface.

The size used in the gilding method described comprises at least 4% acrylic adhesive and between 70% and 90% water by volume of the size. The size may comprise more than 4% acrylic adhesive, for example, the size may comprise 10% acrylic adhesive. The acrylic adhesive may be an acrylic resin. The size may comprise more than 70% water by volume. For example, the size may comprise between 75% and 90% water by volume. The size may comprise between 80% and 90% water by volume. The size may comprise between 85% and 90% water by volume.

The size may further comprise a varnish. The varnish may be a polyurethane varnish. The varnish may comprise for example polyvinyl acetate (PVA) or shellac. The size may comprise between 1% and 5% varnish by volume.

The size may further comprise an emulsifier. The emulsifier may be an aerating agent, starch complexing agent and/or crystallisation inhibitor. The size may comprise between 0.5% and 3% emulsifier by volume.

The size may further comprise essential oil. The essential oil may be lavender oil, patchouli oil or any other type of essential oil. The size may comprise between 0.1% and 1% essential oil by volume.

Some example size compositions are given in Table 1 below.

**Table 1**

| **Constituent** | **Percentage by volume** | | |
|---|---|---|---|
| | **Example 1** | **Example 2** | **Example 3** |
| Water | 77.5 | 82 | 86.5 |
| Acrylic adhesive | 17.5 | 14 | 10.5 |
| Varnish | 3.25 | 2.6 | 1.95 |
| Emulsifier | 1.5 | 1.2 | 0.9 |
| Essential oil | 0.25 | 0.2 | 0.15 |

The method for gilding a surface using a size having the composition shown in example 1 above with a water content of 77.5% may comprise applying just one layer of size. For a size comprising a higher water content and lower adhesive content, such as those shown in examples 2 and 3, the method for gilding a surface may comprise applying at least two layers of size before applying metallic leaf. This is because it is preferred to apply a minimum volume of acrylic adhesive to the surface in order that metallic leaf applied to the surface can be retained to the surface.

Performing the method for gilding described above using a size with a high water content results in a gilded surface with a shiny finish. Performing the method using the size of example 2 may therefore result in a shiner surface than that which would result from performing the method using the size of example 1. Performing the gilding method using a size with the composition shown in example 2 has been found to produce a finish that is equivalently shiny to that resulting using the technique of water gilding. The present gilding method may also have the advantage that retouches to the gilded surface are easy to perform, for example by using a size having a composition similar to that shown in example 3.

Performing a gilding method which uses a size with such a high water content has further advantages over known gilding techniques. The high water content of the size means that a given volume of size can coat a surface more than twenty times the size that the same volume of oil size could coat. Oil size is often associated with considerable costs so using the present gilding method may result in a substantial reduction in the costs involved in gilding a surface.

Additionally, in contrast to oil size, examples of the present size may be odourless, non-toxic and do not oxidise or encourage oxidation. The present method may therefore be suitable for gilding surfaces in outdoor environments and may be performed on a wide range of surfaces. For example, wood, plaster, resin or metal.

Furthermore, the high water content of the claimed size means that a surface can be coated with size more quickly than is typical with an oil size and any errors made during applying the size to the surface may be corrected using water

Once the present size is applied to a surface it may remain tacky for an extended period of time, for example several months. This may allow a gilder to apply the size and then return later to apply more size or apply a metal leaf.

The applicant hereby discloses in isolation each individual feature described herein and any combination of two or more such features, to the extent that such features or combinations are capable of being carried out based on the present specification as a whole in the light of the common general knowledge of a person skilled in the art, irrespective of whether such features or combinations of features solve any problems disclosed herein, and without limitation to the scope of the claims. The applicant indicates that aspects of the present invention may consist of any such individual feature or combination of features. In view of the foregoing description it will be evident to a person skilled in the art that various modifications may be made within the scope of the invention.

## Claims

1. A gilding size, the size comprising at least 4% acrylic adhesive and between 70% and 90% water by volume.

2. The size as claimed in claim 1, wherein the size comprises at least 75% water by volume.

3. The size as claimed in claim 1, wherein the size comprises at least 85% water by volume.

4. The size as claimed in any preceding claim, wherein the size is transparent.

5. The size as claimed in any of claims 1 to 3, wherein the size is coloured.

6. The size as claimed in any preceding claim, the size further comprising an emulsifier.

7. The size as claimed in any preceding claim, the size further comprising an essential oil.

8. The size as claimed in any preceding claim, the size further comprising a varnish.

9. The size as claimed in any preceding claim, wherein the acrylic adhesive is an acrylic resin.

10. A method for gilding a surface, the method comprising applying to a surface the size as claimed in any preceding claim.

11. The method as claimed in claim 10, the method comprising subsequent to applying the size to the surface, polishing the surface using a cloth.

12. The method as claimed in claim 11, wherein the step of polishing the surface is done using a cloth dipped in the size.

13. The method of claims 11 or 12, wherein the step of polishing the surface is done only when the surface is not tacky.

14. The method as claimed in any of claims 10 to 13, the method further comprising, subsequent to the step of applying the size to the surface, applying metallic leaf to the surface.

15. The method as claimed in any of claims 10 to 14, the method further comprising, prior to the step of applying the size to the surface, applying an oily varnish and organic solvent to the surface.
